## Europäisches Patentamt
## European Patent Office
## Office européen des brevets

(11) Publication number: **0 253 814**
**B1**

# EUROPEAN PATENT SPECIFICATION

(45) Date of publication of patent specification: **27.06.90**

(51) Int. Cl.⁵: **B 01 D 29/96, B 01 D 29/50**

(21) Application number: **86901991.9**

(22) Date of filing: **03.03.86**

(86) International application number:
**PCT/IT86/00018**

(87) International publication number:
**WO 86/05118 12.09.86 Gazette 86/20**

(54) FILTERING DEVICE FOR PLASTIC.

(30) Priority: **04.03.85 IT 1975085**

(43) Date of publication of application:
**27.01.88 Bulletin 88/04**

(45) Publication of the grant of the patent:
**27.06.90 Bulletin 90/26**

(84) Designated Contracting States:
**AT BE CH DE FR GB IT LI LU NL SE**

(56) References cited:
**GB-A-1 213 455**
**GB-A-1 574 644**
**NL-A-7 100 467**

(73) Proprietor: **ING. L. DOLCI S.P.A.**
**Via Zucchi, 18**
**I-20095 Cusano Milanino (IT)**

(72) Inventor: **PONTI, Armando**
**Via Roma, 87**
**I-20091 Bresso (Milan) (IT)**
Inventor: **HEER, Sergio**
**Via Quarate, 11**
**I-50012 Bagno a Ripoli (Florence) (IT)**
Inventor: **DOLCI, Lanfranco**
**Via Ressi, 17**
**I-20100 Milan (IT)**

(74) Representative: **Dr. Ing. A. Racheli & C.**
**Viale San Michele del Carso, 4**
**I-20144 Milano (IT)**

Courier Press, Leamington Spa, England.

## Description

The present invention refers to a filtering device of the sliding type, carried out with a fixed guiding structure which can receive a sliding element containing filtering means normally consisting in a perforated support holding the filtering element, so that it is possible to shift the sliding element by inserting in the flow a new filtering means in the place of a clogged one.

GB—A—1.213.455 discloses a filtering device housed in a feed block for an extrusion head, where a fixed guiding structure receives a filters holding shell containing a filter holding perforated plate and filtering means, plate and filtering means being placed in succession in the flow of the plastic mass, wherein the entry hole and exit hole are greatly reduced in comparison to the diameter of the filter which is connected to them by means of two connecting cones. When the filter of the British patent is clogged it can be cleaned and replaced only after having stopped the extruder and disassembled the plug. These operations take a long time and are difficult to carry out at high temperature.

The filtering devices known at present have the following faults or disadvantages:

1) considerable dimensions, so they require a great amount of heat for the heating process as they are subject to great losses (of heat);

2) big section of plastic mass to be cut during the change of the filtering element; normally in fact this section is equal or wider than the filtering surface;

3) possible stagnation of plastic material due to the great flowing section and to the conspicuous inert masses;

4) necessity of several thermoregulation zones which are made necessary just by the great dimensions;

5) considerable weight which lies on the other structure and must therefore be suitably supported.

Aim of the present invention is therefore to carry out a filtering device of simple construction and reduced dimensions, which does not cause stagnations and is easy to handle and to heat.

The said aim has been reached as described in the enclosed claims.

The invention will be now better illustrated with the help of an exemplary embodiment which has been represented in the annexed drawings, where:

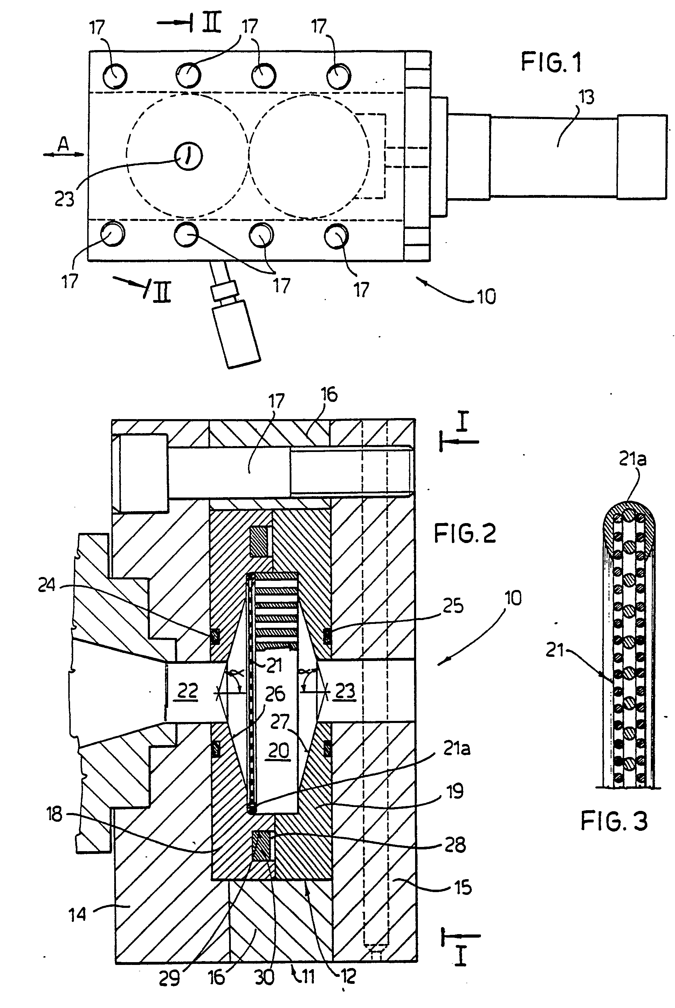

Fig. 1 is a front view of the filtering device, i.e. a view taken from side I—I of Fig. 2;

Fig. 2 is a section view, i.e. taken along line II—II of Fig. 1;

Fig. 3 is a detail of the planned device.

With reference to the drawings, it will be noted that the filtering device has been indicated in its whole with 10 and is composed by a fixed structure 11 and by a shell holding the filters 12 which slides within said fixed guiding structure and is controlled by piston 13 so as to move in the direction of arrows A.

The fixed guiding structure 11 consists in particular in two plates 14 and 15 and in two spacers 16, the said plates being joined to one another by screws 17.

Inside the fixed guiding structure 11 a sliding shell is mounted, generally indicated at 12, and made up of two half shells 18 and 19 which enclose the perforated plate 20 against which the filtering means 21 leans on. This means consists in particular in one or more nets on whose periphery it has been applied an edging 21a, of a material having a coefficient of expansion higher than the steel's with which the rest of the apparatus is built. Lead is particularly suitable for this edging.

The half shells 18 and 19 have symmetrical form and are provided respectively with an entry hole 22 and an exit hole 23, for the product to be filtered and the one just filtered, holes extended also to plates 14 and 15. The filtering means 21 and the respective perforated plate 20 are of much bigger dimensions than holes' 22 and 23. Starting from said holes 22 and 23, two straight circular cones extend, indicated respectively by 26 and 27, which have a large angle α at the vertex, included between 60° and 89°, preferably 80°.

If necessary, gaskets 24 and 25 are also foreseen which carry out the sealing between the shell 12 and the fixed guiding structure 11.

The half shells 18 and 19 can foresee a groove 29 in which it is inserted a material 30 which has a coefficient of thermal expansion higher than the steel's, such as for instance the teflon.

As it will be noted from the description made, the weight of the filtering device comes to be very reduced because the entry and exit holes 22 and 23 have also greatly reduced dimensions. Moreover such limited dimensions of the filtering device allow to carry out the heating of the same by very simple means. Also piston 13, which provides for the movement of the filters holding shell 12 in the direction of arrows A, can have highly reduced dimensions because, being the passage sections of holes 22 and 23 very small, the section of plastic to be cut is limited.

Finally it has been experimentally verified that with the proposed embodiment, and particularly with the tapering planned no stagnation results.

An excellent sealing between the filters holding shell 12 and the fixed guiding structure 11 is obtained because the former is made up of two half shells 18 and 19 free to open under the pressure thrust, so as to make each half shell 18 and 19 firmly adhere to the fixed guiding structure 11 which is next to them, carrying out in this way a perfect sealing along gaskets 24 and 25. The pressure in fact tends to open the half shells 18 and 19 compressing the gaskets 24 and 25 against plates 14 and 15.

The sealing between the two half shells 18 and 19 is carried out with the edging 21a which expands in operation, as well as with gasket 30 which moves towards the opposite half shell as soon as the device is running.

## Claims

1. A filtering device for plastic where a fixed guiding structure (11) can receive a filters holding shell (12) containing filtering means (21) and a filter holding perforated plate (20) which are placed in succession in the flow of the plastic mass, wherein the entry hole (22) and exit hole (23) of the plastic mass are greatly reduced in comparison to the diameter of the filtering means (21) which is connected to them by means of two connecting cones (26, 27), characterized in that the filters holding shell (12) and the guiding structure (11) are made of steel, that the filters holding shell (12) is made up of two half shells (18 and 19) between which the filter holding perforated plate (20) and the filtering means (21) are inserted, that this shell (12) is slidably mounted within the guiding structure (11), and the seal between the two half shells is carried out by means having a coefficient of thermal expansion higher than the one of steel.

2. A filtering device according to claim 1, characterized in that the filtering means (21) has an edging (21A) made of a material having a coefficient of expansion higher than that of the steel, lead being most suitable.

3. A device according to claim 1, characterized in that the seal is formed of a gasket (28) inserted in a groove (29) foreseen between the two half shells (18 and 19), inside said groove a material (30) is also placed having a coefficient of thermal expansion higher than that of the steel.

4. A device according to any of the previous claims, characterized in that the two connecting cones (26, 27) have an angle alpha at the vertex included between 60 and 89°.

5. A filtering device according to any of previous claims characterized in that the cones (26 and 27) have an angle of 80°.

6. A filtering device according to any of the previous claims, characterized in that the diameter of the entry (22) and exit hole (23) is included between a fourth and a fifth of the diameter of the filtering means (21).

## Patentansprüche

1. Filteranlage für Kunststoffe, bei der eine feste Führungsstruktur (11) geeignet ist, eine Filterhalterschale (12) aufzunehmen, die Filtermittel (21) und eine gelochte Filterhalterplatte (20) enthält, die sich in Reihenfolge des Durchlaufs der Kunststoffmasse anordnen, wobei die Eingangsöffnung (22) und die Ausgangsöffnung (23) gegenüber dem Durchmesser des Filtermittels (21), das mit ihnen durch zwei Verbindungskegel (26, 27) verbunden ist, verkleinert ist, dadurch gekennzeichnet, daß die Filterhalterschale (12) und die Führungsstruktur (11) aus Stahl sind, daß die Filterhalterschale (12) aus zwei Halbschalen (18 und 19) gebildet ist, zwischen die die gelochte Filterhalterschale (20) und das Filtermittel (21) eingesetzt werden, daß die Schale (12) in der Führungsstruktur (11) gleitbar montiert ist und daß die Abdichtung zwischen den beiden Halbschalen mit einem Mittel verwirklicht wird, das einen größeren thermischen Ausdehnungskoeffizient hat als der Stahlkoeffizient.

2. Filteranlage nach Anspruch 1, dadurch gekennzeichnet, daß das Filtermittel (21) eine Umrandung (21a) aufweist, die mit einem Mittel ausgeführt ist, das einen größeren Ausdehnungskoeffizient als Stahl hat, wobei am besten Blei geeignet ist.

3. Filteranlage nach Anspruch 1, dadurch gekennzeichnet, daß die Dichtung (28) in einer zwischen den beiden Halbschalen (18, 19) vorgesehenen Nut (29) eingeführt ist, wobei in dieser Nut ebenfalls Material (30) angeordnet ist, das einen höheren thermischen Ausdehnungskoeffizient hat als Stahl.

4. Filteranlage nach einem der obigen Patentansprüche, dadurch gekennzeichnet, daß die beiden Verbindungskonen (26, 27) einen Alfa-Winkel am Scheitel von 60 bis 89° haben.

5. Filteranlage nach einem der obigen Patentansprüche, dadurch gekennzeichnet, daß die Konen (26, 27) einen Winkel von 80° aufweisen.

6. Filteranlage nach einem der vorstehenden Patentansprüche, dadurch gekennzeichnet, daß der Durchmesser der Eingangsöffnung (22) und der Ausgangsöffnung (23) ein Viertel und ein Fünftel des Filtermittels (21) beträgt.

## Revendications

1. Dispositif de filtration du plastique où une structure fixe de guidage (11) peut recevoir une coquille porte-filtres (12) contenant des moyens filtrants (21) et une plaque perforée porte-filtres (20), qui se disposent en succession sur le parcours de la masse plastique, le trou d'entrée (22) et le trou de sortie (23) de la masse plastique étant réduit par rapport au diamètre du moyen filtrant (21) qui est relié à ceux-ci à l'aide de deux cônes de liaison (26, 27), caractérisé en ce que la coquille porte-filtres (12) et la structure de guidage (11) sont en acier, que la coquille porte-filtres (12) se compose de deux demi-coquilles (18 et 19) entre lesquelles sont introduits la plaque perforée porte-filtre (20) et le moyen filtrant (21), que cette coquille (12) est coulissante à l'intérieur de la structure de guidage (11) et que l'étanchéité entre les deux demi-coquilles est réalisée à l'aide d'un moyen ayant un coefficient de dilatation thermique supérieure à celui de l'acier.

2. Dispositif de filtration selon la revendication 1, caractérisé en ce que le moyen filtrant (21) présente un bord (21a) fait avec un matériau ayant un coefficient de dilatation supérieur à celui de l'acier, le plomb convenant le mieux.

3. Dispositif selon la revendication 1, caractérisé en ce que l'étanchéité relevé d'un joint (28) introduit dans une cannelure (29) prévue entre les deux demi-coquilles (18, 19), cannelure à l'intérieur de laquelle se trouve aussi un matériau (30) ayant un coefficient de dilatation thermique supérieur à culi de l'acier.

4. Dispositif selon n'importe laquelle des revendications précédentes caractérisé en ce que les deux cônes de liaison (26, 27) ont un angle alfa au sommet qui va de 60 à 89°.

5. Dispositif filtrant selon n'importe laquelle des revendications précédentes, caractérisé en ce que les cônes (26 et 27) ont un angle de 80°.

6. Dispositif filtrant selon n'importe laquelle des revendications précédentes, caractérisé en ce que le diamètre du trou d'entrée (22) et de sortie (23) est compris entre un quart et un cinquième du diamètre du moyen filtrant (21).

FIG.1

FIG.2

FIG.3